(19) Europäisches Patentamt / European Patent Office / Office européen des brevets

(11) **EP 2 397 992 A1**

(12) **EUROPEAN PATENT APPLICATION**

(43) Date of publication:
   **21.12.2011 Bulletin 2011/51**

(51) Int Cl.:
   **G06T 11/00** *(2006.01)*

(21) Application number: **11168604.4**

(22) Date of filing: **02.06.2011**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**

(30) Priority: **17.06.2010 KR 20100057653**

(71) Applicant: **Samsung Electronics Co., Ltd.**
   **Yeoungtong-gu**
   **Suwon-si, Gyeonggi-do (KR)**

(72) Inventors:
   • **Park, Ji-yong**
     **Gyeonggi-do (KR)**
   • **Im, Sang-kyun**
     **Seoul (KR)**
   • **Beon, Nam-kyun**
     **Seoul (KR)**

(74) Representative: **Hewett, Jonathan Michael Richard et al**
   **Venner Shipley LLP**
   **20 Little Britain**
   **London EC1A 7DH (GB)**

(54) **Image processing method for brush effect and display apparatus applying the same**

(57)   An image processing method and a display apparatus using the same are provided. The image processing method includes: selecting a first pixel of an inputted image as a pixel for processing; selecting a second pixel from among pixels in proximity to the first pixel; and performing a brush effect processing with respect to the first pixel using image data that is selected in accordance with whether the first and the second pixels belong to a same area. As a result, the display apparatus provides a maximized brush effect.

FIG. 2

EP 2 397 992 A1

**Description**

The present invention relates to an image processing method for a brush effect and a display apparatus applying the same, and more particularly, to an image processing method for adding a brush effect to an original image, and a display apparatus applying the same.

Related art display apparatuses support a variety of operations that are in addition to a photograph or image displaying operation. Among the additional operations is a non photo-realistic rendering (NPR).

NPR is a method of processing an image in a non-realistic manner by adding various effects, instead of processing the image as is. NPR drastically emphasizes or deletes certain details of an image to draw the attention of viewers to an intended subject. The fields of gaming, animation, advertising, and film-making utilize NPR.

Accordingly, NPR enables non-realistic rendering of an input image by utilizing a variety of methods, including, for example, color pen drawing, pen drawing, oil painting, watercolor drawing, cartoon, sketch, etc.

NPR for a brush effect is particularly used to improve a realistic representation of an oil drawing or a watercolor drawing. Related art NPR for a brush effect includes a pixel-based method and a literation method.

The pixel-based method has a drawback of a relatively weak brush effect. The literation method has a drawback of a longer processing time and a need for a higher CPU processing power. Accordingly, applying the literation method with respect to a moving image is not supported, since it is difficult to process the literation method in a real-time basis.

Accordingly, there is a need for a method in which NPR for a high quality brush effect is provided with increased simplicity.

Exemplary embodiments of the present invention relate to an image processing method for a brush effect and a display apparatus applying the same.

In particular, one or more exemplary embodiments relate to an image processing method for processing a brush effect on a pixel using image data which is selected depending on whether a pixel for processing and one of pixels in proximity to the pixel for processing belong to a same area, and a display apparatus applying the same.

According to an aspect of the present invention, there is provided a method of processing an image, the method including: selecting a first pixel as a pixel for processing, from an inputted image; selecting a second pixel from among pixels in proximity to the first pixel; and performing a brush effect processing with respect to the first pixel using image data which is selected in accordance with whether the first and the second pixels belong to a same area.

The performing may include determining whether the first and second pixels belong to the same area, performing the brush effect processing with respect to the first pixel using brush effect-added image data of a pixel preceding the first pixel if the first and the second pixels are determined to belong to the same area, and performing the brush effect processing with respect to the first pixel using original image data of the first pixel if the first and second pixels are determined to not belong to the same area.

The determining may include setting a threshold for an area corresponding to the first pixel, computing a representative value of a pixel block which includes the second pixel and pixels in proximity to the second pixel, and determining whether the first and the second pixels belong to the same area according to a different between the threshold and the representative value.

The determining may include determining the first and the second pixels to be in different areas if the representative value is greater than the threshold, and determining the first and the second pixels to be in the same area if the representative value is less than or equal to the threshold.

The computing may include computing the representative value (Area_Det) of the pixel block according to:

$$
Area\_Det[p(x+j, y+i)] = \sum_{\substack{-1 \le j \le 1, -1 \le i \le 1}} \sum_{m=-1}^{1} \sum_{n=-1}^{1} \left| p(x+j+m, y+i+n) - p(x+m, y+n) \right|,
$$

where $Area\_Det[p(x+j, y+i)]$ is a representative value of pixel ($p(x+j, y+i)$).

The setting the threshold may include variably setting the threshold in accordance with a type of the area corresponding to the first pixel.

The selecting the second pixel may include selecting one of the pixels in proximity to the first pixel using random coordinates.

The random coordinates may be generated by a linear feedback shift register (LFSR).

If the inputted image is a video image, the random coordinates may be initiated for every frame.

The selecting the second pixel may include selecting one of eight pixels surrounding the first pixel as the second pixel.

According to another aspect of the present invention, there is provided a display apparatus including: an image processing unit which selects a first pixel as a pixel for processing from an inputted image, selects a second pixel from among pixels in proximity to the first pixel, and performs a brush effect processing with respect to the first pixel using image data which is selected in accordance with whether the first and the second pixels belong to a same area; and a display unit which displays the brush effect-added image.

The image processing unit determines whether the first and the second pixels belong to the same area, performs the brush effect processing with respect to the first pixel using brush effect-added image data of a pixel preceding the first pixel if the first and the second pixels are determined to be in the same area, and performs the brush effect processing with respect to the first pixel using original image data of the first pixel if the first and the second pixels are determined to be in different areas.

The image processing unit sets a threshold for an area corresponding to the first pixel, computes a representative value of a pixel block which includes the second pixel and pixels in proximity to the second pixel, and determines whether the first and the second pixels belong to the same area according to a difference between the threshold and the representative value.

The image processing unit determines the first and the second pixels to be in different areas if the representative value is greater than the threshold, and determines the first and second pixels to be in the same area if the representative value is less than or equal to the threshold.

The image processing unit may compute the representative value (Area_Det) of the pixel block according to:

$$Area\_Det[p(x+j, y+i)] = \sum_{m=-1}^{1}\sum_{n=-1}^{1}\left|p(x+j+m, y+i+n) - p(x+m, y+n)\right|,$$

where *Area_Det*[*p*(*x+j, y+i*)] is a representative value of pixel (*p*(*x+j, y+i*)).

The image processing unit may variably set the threshold in accordance with a type of the area where the first pixel belongs to.

The image processing unit may select one of the pixels in proximity to the first pixel using random coordinates.

The image processing unit may include a linear feedback shift register (LFSR) which generates the random coordinates.

The image processing unit may initialize the random coordinates for every frame, if the inputted image is a video image.

The image processing unit may select one of eight pixels surrounding the first pixel as the second pixel.

According to another aspect of the present invention, there is provided an image processing apparatus including: an image processing unit which selects a first pixel of an inputted image as a pixel for processing, selects a second pixel from among pixels in proximity to the first pixel, and performs a brush effect processing with respect to the first pixel using image data that is selected in accordance with whether the first and the second pixels belong to a same area; and an output unit which outputs the brush effect-added image.

The image processing method and the display apparatus according to the above-described exemplary embodiments apply a brush effect with respect to a pixel for processing using image data which is selected in accordance with a determination as to whether the pixel for processing and one of pixels in proximity to the pixel for processing belong to a same area. As a result, the display apparatus provides a maximized brush effect.

Furthermore, since it is possible to determine boundary areas during brush effect processing, boundaries of the original image remain unchanged. Additionally, the image provides a maximized expression since a degree of brush effect varies in accordance with a specific type of the processed image. Furthermore, due to a simplified brush effect processing, a real-time basis brush effect processing is possible, and the processing is applicable to, for example, a video image.

The above and/or other aspects will be more apparent by describing certain exemplary embodiments with reference to the accompanying drawings, in which:

FIG. 1 is a block diagram of a digital frame according to an exemplary embodiment;

FIG. 2 is a flowchart provided to explain a brush effect processing method with respect to an image according to an exemplary embodiment;

FIGs. 3A to 3C are views related to generating of random coordinates using a linear feedback shift register (LFSR) according to an exemplary embodiment;

FIG. 4 is a view illustrating a process of selecting a pixel block which includes a first pixel for processing and eight pixels surrounding the first pixel, according to an exemplary embodiment;

FIG. 5 illustrates an example where a second pixel is selected using random coordinates, according to an exemplary embodiment;

FIG. 6 is a view provided to explain examples where pixels are in a same area or in different areas, according to an exemplary embodiment;

FIG. 7 is a view provided to explain a brush effect processing according to an exemplary embodiment;

FIG. 8 illustrates an example of a brush effect processing according to an exemplary embodiment;

FIGs. 9A and 9B are exemplary images before and after a brush effect processing, according to an exemplary embodiment; and

FIGs. 10A and 10B are other exemplary images before and after a brush effect processing according to an exemplary embodiment.

Certain exemplary embodiments will now be described in greater detail with reference to the accompanying drawings.

In the following description, same drawing reference numerals are used for the same elements even in different drawings. The matters defined in the description, such as detailed constructions and elements, are provided to assist in a comprehensive understanding of the exemplary embodiments. Accordingly, it is apparent that the exemplary embodiments can be carried out without those specifically defined matters. Also, well-known functions or constructions are not described in detail since they would obscure the exemplary embodiments with unnecessary detail. It is understood that expressions such as "at least one of," when preceding a list of elements, modify the entire list of elements and do not modify the individual elements of the list.

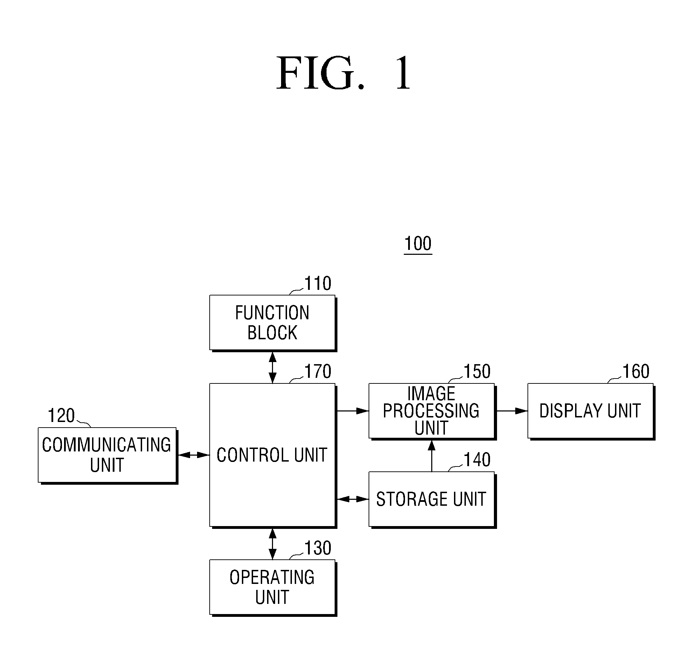

FIG. 1 is a block diagram of a digital frame 100 according to an embodiment.

Referring to FIG. 1, the digital frame 100 may include an operation block 110, a communicating unit 120, an operating unit 130, a storage unit 140, an image processing unit 150, a display unit 160, and a control unit 170.

The operation block 110 may perform a first operation of the digital frame 100. For example, the operation block 110 may play back an image (e.g., photographs or videos).

The communicating unit 120 may be connected communicatively to an external device through a mobile communication network or the Internet. The communicating unit 120 may also download image content from the external device.

A user may manipulate the operating unit 130 to input a corresponding command. That is, the user may manipulate the operating unit 130 in a manner that corresponds to a plurality of commands including, for example, a command to select an item from among a plurality of items displayed on a screen. The operating unit 130 may include at least one of a touch screen, a button, a mouse, a touchpad, a remote controller, a rotatable dial, etc.

The storage unit 140 may store programs and applications used to perform operations of the digital frame 100. The storage unit 140 may also store image data therein.

The image processing unit 150 may process the inputted image data and output the processed image data to the display unit 160. In particular, the image processing unit 150 may perform a non-photorealistic rendering (NPR) on the inputted image to add, for example, a brush effect to the inputted image. A process of the image processing unit 150 to carry out the NPR to add the brush effect according to an exemplary embodiment will be explained in detail below.

Herein, it is understood that the inputted image may refer to an image signal or image data inputted from an outside source and an image signal or image data inputted from the storage unit 140 to the image processing unit 150.

The image processing unit 150 selects a first pixel from the inputted image as a pixel for brush effect processing. The image processing unit 150 also selects a second pixel, from among pixels in proximity to the first pixel. Herein, the second pixel represents any of the pixels near the first pixel.

By way of example, the image processing unit 150 may set eight pixels to be the pixels in proximity to the first pixel, and selects one of the eight pixels as the second pixel. That is, the image processing unit 150 may set the nine pixels (i.e., including the first pixel) as a unit for processing. It is understood that the above example is provided only for illustrative purpose, and another exemplary embodiment is not limited thereto. Accordingly, the number of the pixels and the manner of selecting the pixel in proximity may be implemented differently in one or more other exemplary embodiments.

The image processing unit 150 may select one of the pixels in proximity to the first pixel as the second pixel using random coordinates. The random coordinates refer to coordinates used to randomly select the pixels in proximity to replace the image data in order to accomplish the brush effect. As explained above, the image processing unit 150 may provide a more naturally-appearing brush effect by using the random coordinates.

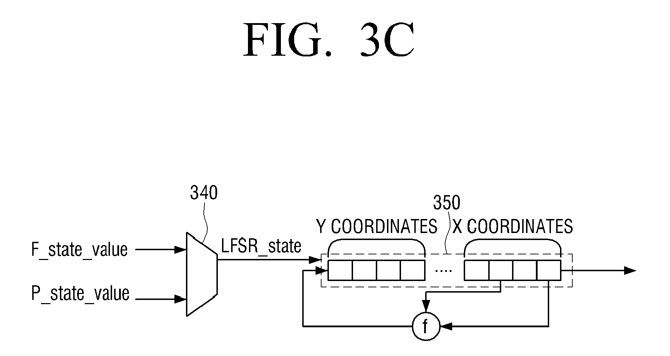

The image processing unit 150 may include a linear feedback shift register (LFSR) to generate the random coordinates. The LFSR generates random x and y coordinates. The structure of the LFSR is illustrated in FIG. 3C, and will be explained in detail below with reference to FIG. 3C.

The image processing unit 150 may initialize the random coordinates per frame, if a video image is inputted, to prevent flicker. The flicker may occur when the frames of the video do not have the same random coordinates. Accordingly, the image processing unit 150 updates the state value of the LFSR to the initial value at the end of every frame.

As explained above, the image processing unit 150 selects the first pixel and the second pixel from among the pixels near the first pixel using the random coordinates.

Moreover, the image processing unit 150 determines if the first and second pixels belong to a same area, which will be described in greater detail below.

The image processing unit 150 sets a threshold with respect to an area corresponding to the first pixel. The threshold herein is a maximum difference between image data which is perceivable to be from the same area. The threshold may be implemented as a sum of absolute difference (SAD).

The image processing unit 150 may set a different threshold depending on a type of the area where the first pixel belongs. For example, the image processing unit 150 may set a different threshold depending on whether the first pixel belongs to an object (e.g., person) or a background of the image.

Furthermore, the image processing unit 150 computes a representative value of the pixel block which includes the second pixel and pixels in proximity to the second pixel. For example, there may be eight (8) pixels in proximity to the second pixel, and the SAD may be implemented as the representative value of the second pixel and the pixels in proximity to the second pixel. The image processing unit 150 may compute the representative value of the second pixel and the pixels in proximity to the second pixels with SAD according to: [Mathematical equation 1]

[Mathematical equation 1]

$$Area\_Det[p(x+j, y+i)] = \sum_{m=-1}^{1}\sum_{n=-1}^{1}\left|p(x+j+m, y+i+n) - p(x+m, y+n)\right|$$

where *Area_Det*[*p*(*x+j*, *y+i*)] is the representative value of the second pixel *p*(*x+j*, *y+*i)).

As explained above, the image processing unit 150 computes the representative value of the second pixel to determine if the first and second pixels belong to the same area based on the difference between the threshold and the representative value.

That is, the image processing unit 150 determines that the first and second pixels belong to different areas if the representative value is greater than the threshold. If the representative value is less than or equal to the threshold, the image processing unit 150 determines that the first and second pixels belong to the same area.

Accordingly, the image processing unit 150 selects the image data for processing differently, depending on the determination as to whether the first and second pixels belong to the same area.

That is, if the first and second pixels belong to the same area, the image processing unit 150 may perform a brush effect processing with respect to the first pixel, using a brush effect-added image data (i.e., pixel data of propagation) from at least one pixel preceding the first pixel. Accordingly, all the first pixel and the pixels in proximity to the first pixel have the image data values which are changed to the image data value of the second pixel as a result of the brush effect. Herein, the image data value of the second pixel refers to the second pixel value of the brush effect-added image data.

In contrast, if the first and second pixels do not belong to the same area, the image processing unit 150 performs the bush effect processing with respect to the first pixel using the original image data of the first pixel. Accordingly, the first pixel and the pixels in proximity to the first pixel have the image data values which are changed to the image data value of the pixel which has the lowest pixel similarity to the first pixel. In this situation, the original image data value is used as the image data value of the pixel of the lowest similarity to the first pixel. Accordingly, the image processing unit 150 searches the pixels in proximity to the first pixel, using the original image data values, for the pixel of the lowest similarity to the first pixel. As explained above, since the image processing unit 150 applies the brush effect differently depending on whether the first and second pixels belong to the same area, it is possible for a user to determine a boundary area during the brush effect processing and thus distinguish objects on the image with increased clarity even when the brush effect is applied.

The image processing unit 150 may carry out the above-explained processing with respect to all the pixels of the inputted image. In this case, since an entirety of the inputted image is treated with the image effect by which the colors are blurred, the resultant image is displayed with the effect as if the image is brushed. Accordingly, the image processing unit 150 processes the inputted image to add the brush effect thereto.

The display unit 160 displays the image added with the brush effect at the image processing unit 150 on a screen. The display unit 160 may display the image using a liquid crystal display (LCD), a plasma display panel (PDP), active matrix organic light emitting diodes (AMOLED), etc.

The control unit 170 controls the overall operations of the digital frame 100 according to a command by the user inputted through the operating unit 130. The control unit 170 may also control so that the operations of the image processing unit 150 as explained above are performed.

The digital frame 100 performs the brush effect as described above to thus maximize the brush effect. Additionally, due to a simplified processing of the brush effect, it is possible to perform the brush effect in real-time basis. Accordingly, the digital frame 100 may apply the brush effect to, for example, a video image. While a digital frame 100 is described above as applying the brush effect, it is noted that the digital frame 100 is provided for exemplary purposes, and any image processing apparatus (such as a computer, a workstation, a mobile device, etc.) may perform the brush effect according to an exemplary embodiment.

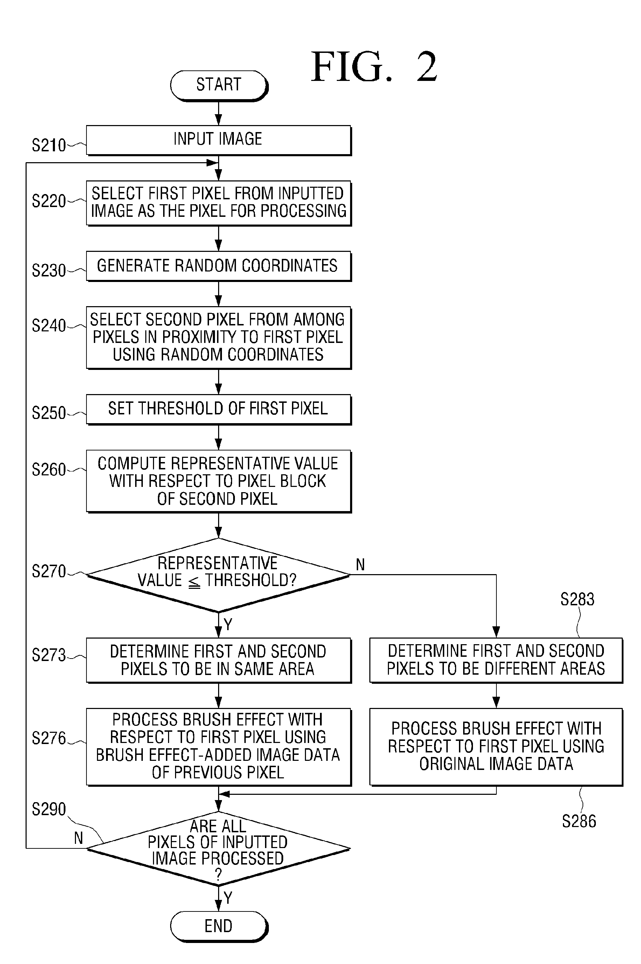

FIG. 2 is a flowchart provided to explain a method of processing a brush effect with respect to an image according to an exemplary embodiment.

Referring to FIG. 2, at operation S210, a digital frame 100 according to an exemplary embodiment receives an inputted image. The inputted image may be an image signal inputted from an outside source or an image signal or data inputted from a built-in storage medium of the digital frame 100.

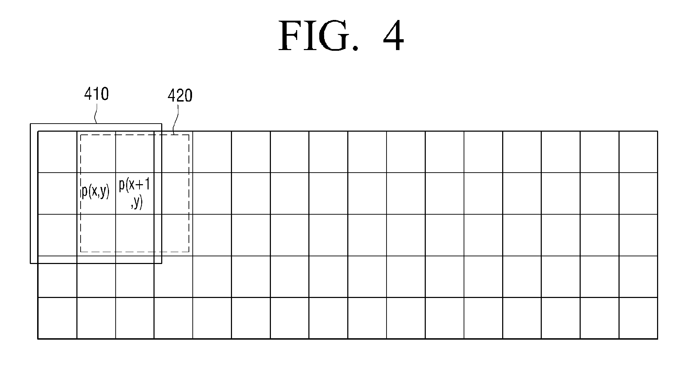

At operation S220, the digital frame 100 selects a first pixel for a brush effect processing from the inputted image. An example of the process of selecting the first pixel is illustrated in FIG. 4.

FIG. 4 illustrates a process of selecting a first pixel to be processed, and a pixel block which includes eight pixels in proximity to the first pixel, according to an exemplary embodiment. Referring to FIG. 4, a digital frame 100 selects the first pixel to be processed from an inputted image, in a sequential order from a pixel on a left-upper end to a right direction.

Specifically, pixel $p(x,y)$ is first selected as the pixel for processing. When the processing of $p(x,y)$ is completed, pixel $p(x+1, y)$ is then selected for processing. As explained above, the pixels for processing are selected in a sequential order to the right direction (though it is understood that another exemplary embodiment is not limited thereto), and when the pixel on the right-upper end is processed, the pixels on the next line are then selected in a sequential order for processing, i.e., beginning from pixel $p(x, y+1)$ on the left end and towards the right end.

If $p(x, y)$ is selected as the pixel for processing, the first pixel block 410 is selected as a unit for brush effect processing. That is, referring to FIG. 4, a 3x3 block of pixels, including the pixel for processing at a center, are set to be the unit for brush effect processing, and all the pixels of the first pixel block 410 are processed to have the same image data value. Accordingly, when $p(x+1, y)$ is selected as the pixel for processing, a second pixel block 420 is selected as the unit for brush effect processing.

As explained above, the digital frame 100 selects the pixels in a sequential order, starting from the pixel on the left-upper end, though it is understood that another exemplary embodiment is not limited to this starting point or this order.

Referring back to FIG. 2, at operation S230, the digital frame 100 generates random coordinates using the LFSR. In the LFSR, the inputted value is calculated as a linear function of its previous state. The exclusive-or (XOR) is mainly used as the linear function. An initial value of the LFSR may be referred to as a seed.

Because an operation of the register is deterministic, a stream of values produced by the LFSR is determined by its previous state. Likewise, because the register has a finite number of possible states, the stream produced by the LFSR eventually enters a repeating cycle. However, an LFSR with a well-chosen feedback operation can produce a sequence of bits which appears random and which has a long cycle.

Given the above-explained characteristics, the LFSR may be used in applications of generating pseudo-random numbers, pseudo-noise sequences (PRN), fast digital counters, whitening sequences, etc. In an exemplary embodiment, the LFSR is used to generate the random coordinates.

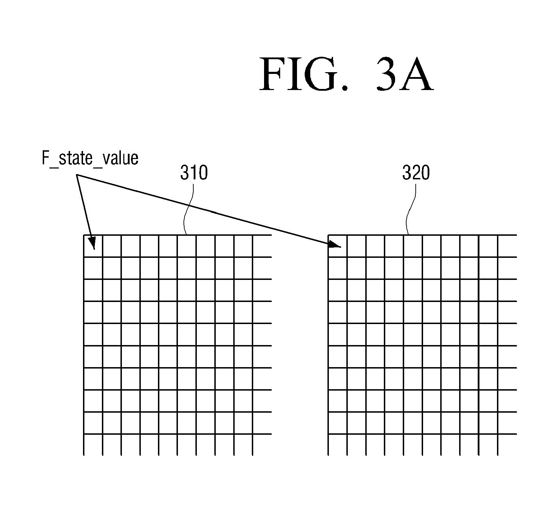

The process of generating random coordinates and a structure of the LFSR according to an exemplary embodiment will be explained in greater detail below with reference to FIGs. 3A to 3C, which are views related to the generating of the random coordinates using the LFSR.

FIG. 3A illustrates a selecting of one (F_state_value) of the state values of the LFSR according to an exemplary embodiment. Referring to FIG. 3A, F_state_value corresponds to a first pixel value of each frame. Accordingly, in both of first and second frames 310, 320, F_state_value may correspond to the first pixel value on the left-upper end.

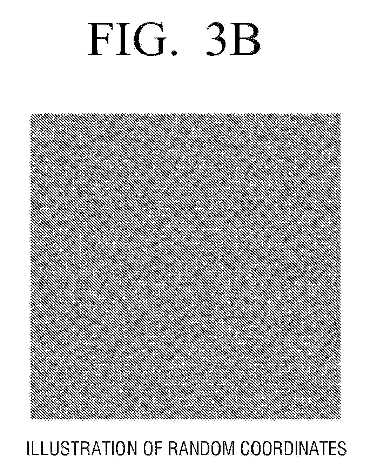

FIG. 3B is an illustration of random coordinates according to an exemplary embodiment. Referring to FIG. 3B, the random coordinates have a uniform distribution without a specific pattern.

FIG. 3C illustrates a structure of an LFSR 350 according to an exemplary embodiment. Referring to FIG. 3C, a register area of the LFSR 350 may be divided into an x coordinate area and a y coordinate area, and outputs x and y coordinates randomly.

Additionally, the LFSR 350 receives an LFSR_state value as the initial value. The LFSR_state value is generated as F_state_value and P_state_value are multiplexed at the multiplexer 340. F_state_value refers to an initial value inputted in every frame, and P_state_value refers to an initial value inputted in every pixel. As a result, the value outputted from the LFSR 350 is determined by F_state_value and P_state_value.

If a video image is the inputted image, the digital frame 100 updates F_state_value to the initial value to initialize the random coordinates in every frame. By doing so, the LFSR 350 outputs the same random coordinates in every frame. If different types of random coordinates are applied in every frame, the brush effect varies, in which case flicker may occur between frames. Accordingly, in order to prevent flicker, the digital frame 100 updates F_state_value to the initial value in every frame so that the same random coordinates are applied for every frame.

Accordingly, the digital frame 100 may generate the random coordinates using the LFSR 350 as described above.

Referring back to FIG. 2, at operation S240, the digital frame 100 selects one (i.e., the second pixel) from among the pixels in proximity to the first pixel. Herein, the selected second pixel represents any of the pixels in proximity to the first pixel. The pixels in proximity are pixels included in the pixel block, which is the unit for processing, excluding the first pixel.

For example, the digital frame 100 may set eight pixels surrounding the first pixel to be the pixels in proximity, and may select one of the eight pixels as the second pixel. In this case, the pixel block may include 9 pixels, including the first pixel and the eight pixels surrounding the first pixel. In other words, the digital frame 100 may set the nine pixels, in which eight pixels surround the first pixel at the center, to be one unit of processing. However, it is understood that another exemplary embodiment is not limited thereto, and the number of the pixels, or the manner of selecting the pixels in proximity, may be differently applied in one or more other exemplary embodiments.

The digital frame 100 selects one of the pixels in proximity to the first pixel as the second pixel. Herein, the random coordinates are applied so that the pixel in proximity is selected randomly as a substitute for the image data and to thus provides the brush effect. Since the digital frame 100 applies the random coordinates, a more naturally-appearing brush effect is provided.

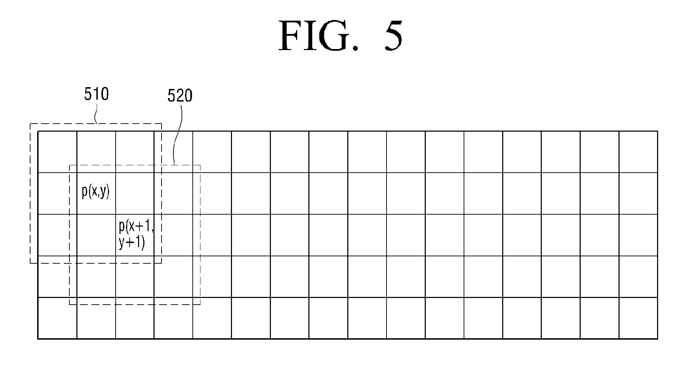

FIG. 5 illustrates a state in which the second pixel is selected according to the random coordinates. The first pixel in FIG. 5 is currently $p(x, y)$. In this state, by the application of the random coordinates, $p(x+1, y+1)$ is selected as the second pixel in FIG. 5. The selected pixel $p(x+1, y+1)$ is one of the pixels in proximity to the first pixel in the pixel block 510 of $p(x, y)$.

As explained above, the image processing unit 150 selects one of the pixels in proximity to the first pixel as the second pixel, using the random coordinates.

Referring back to FIG. 2, at operation S250, the digital frame 100 sets a threshold with respect to the first pixel. The threshold herein refers to a maximum difference between image data which is perceivable to be from the same area. The threshold may be implemented as a sum of absolute difference (SAD).

The image processing unit 150 may set a different threshold depending on a type of the area where the first pixel belongs. For example, the image processing unit 150 may set a different threshold depending on whether the first pixel belongs to an object (i.e., a person) or a background of the image.

At operation S260, the digital frame 100 computes a representative value of the pixel block which includes the second pixel and the pixels in proximity to the second pixel. Eight pixels may be determined to be the pixels in proximity to the second pixel. For example, referring to FIG. 5, if the second pixel is $p(x+1, y+1)$, the digital frame 100 may select the pixel block 520 which includes $p(x+1, y+1)$ and the eight pixels surrounding $p(x+1, y+1)$ to compute a representative value.

The representative value may be the SAD with respect to the image data values of the second pixels and the pixels in proximity to the second pixel. The digital frame 100 may compute the SAD of the second pixel and the pixels in proximity as the representative value by mathematical equation 1 explained above.

At operation S270, the digital frame 100 determines whether the representative value is less than or equal to the threshold. At operation S270-Y, if the representative value is determined to be less than or equal to the threshold, at operation S273, the digital frame 100 determines the first and second pixels to be in the same area. At operation S276, the digital frame 100 performs the brush effect processing with respect to the first pixel, using the brush effect-added image data (i.e., pixel data of propagation) from pixels preceding the first pixel. Accordingly, the first pixel and the pixels in proximity to the first pixel have the image data values which are changed to the image data value of the second pixel as a result of the brush effect. Herein, the image data value of the second pixel refers to the second pixel value of the brush effect-added image data.

In contrast, at operation S270-N, if the representative value is determined to be greater than the threshold, at operation S283, the digital frame 100 determines the first and second pixels to be in different areas. At operation S286, the digital frame 100 performs the brush effect processing with respect to the first pixel, using the original image data of the first pixel. By the brush effect processing, the image data values of the first pixel and the pixels in proximity to the first pixel are changed to the image data value of the pixel with the lowest similarity to the first pixel. In this case, the original image data value is applied as the image data value of the pixel with the lowest similarity to the first pixel. Furthermore, the digital frame 100 searches the pixels in proximity for the pixel that has the lowest similarity to the first pixel using the original image data values.

At operation S290, the digital frame 100 determines if all the pixels of the inputted image are added with the brush effect. At operation S290-N, if it is determined that not all the pixels are processed with the brush effect, at operation S220, the digital frame 100 selects another first pixel as the next pixel for processing.

At operation S290-Y, if it is determined that all the pixels are processed with respect to the inputted image, the digital frame 100 ends the processing for adding the brush effect to the inputted image.

As explained above, the digital frame 100 applies the brush effect differently depending on whether the first and second pixels belong to the same area. Accordingly, the digital frame 100 is able to determine a boundary area during the brush effect processing, and thus maintain the boundary of the original image. Since it is possible for the digital frame 100 to add the brush effect while maintaining the original boundary of the image, a user can distinguish objects on the image with increased clarity even when the brush effect is applied.

Furthermore, the digital frame 100 provides a maximized brush effect by performing the brush effect processing in the manner explained above. Furthermore, since the brush effect processing is simplified, thereby enabling real-time brush effect processing, the digital frame 100 may apply the brush effect to such content as a video image.

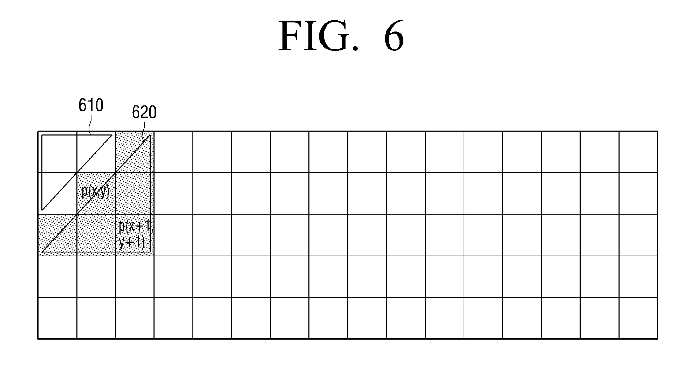

The process of distinguishing areas and applying a brush effect according to one or more exemplary embodiments will be explained in detail below with reference to FIGs. 6 to 8, in which FIG. 6 is provided to explain an example where pixels are in a same area and different areas.

Specifically, FIG. 6 illustrates an example where a first pixel, as the a for processing, is $p(x, y)$. A pixel block is formed around the center $p(x, y)$, and this pixel block is divided into first and second areas 610, 620. The first area 610 includes three pixels, $p(x-1,y-1)$, $p(x,y-1)$, $p(x-1,y)$. The second area 620 includes six pixels, $p(x+1,y-1)$, $p(x,y)$, $p(x+1,y)$, $p(x-1, y+1)$, $p(x,y+1)$, $p(x+1,y+1)$.

If $p(x+1,y+1)$ is selected as the second pixel, the digital frame 100 determines the first and second pixels to be in the same area. However, if $p(x-1, y-1)$ is selected to be the second pixel, the digital frame 100 determines that the first and second pixels belong to different areas.

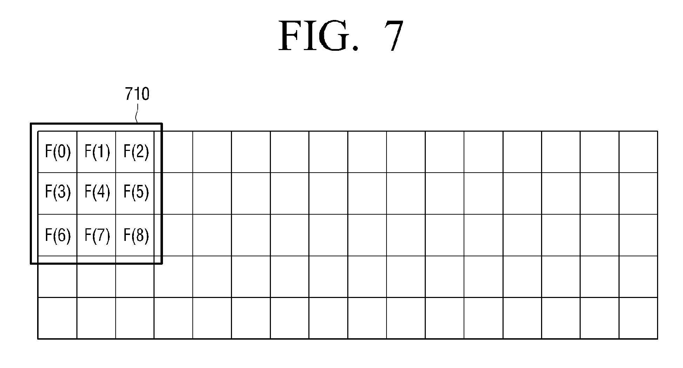

FIG. 7 is provided to explain a process of applying a brush effect according to an exemplary embodiment.

Referring to FIG. 7, pixels in a pixel block 710 for processing may include coefficients F(0) to F(8). The coefficients F(0) to F(8) are applied to reflect the data of the original image.

Accordingly, a digital frame 100 according to an exemplary embodiment determines the final image data value of the pixel by multiplying the image data value of each of the replaced pixels by a corresponding coefficient. For example, if the second pixel is selected to be $p(x, y-1)$, and the first and second pixels are determined to be in the same area, the digital frame 100 replaces the image data values of all the pixels with the image data value of $p(x, y-1)$. Subsequently, the digital frame 100 multiplies the image data value of each of the pixels included in the pixel block 710 by a corresponding coefficient F(0) to F(8). Accordingly, the digital frame 100 performs image processing for a brush effect. In this processing, the digital frame 100 may determine the image data value of the second pixel and the final image data values of the pixels by considering the coefficients set for the respective pixels.

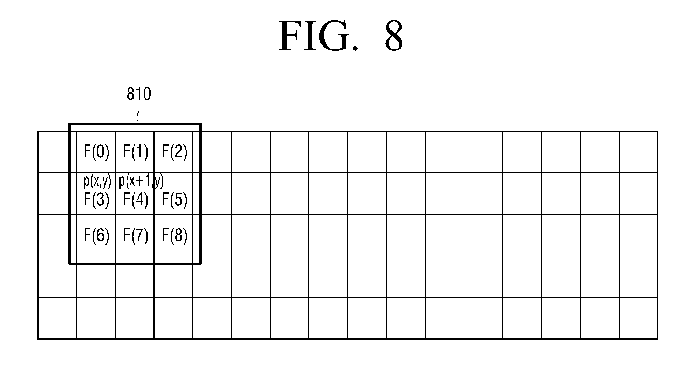

FIG. 8 illustrates an example of a brush effect processing according to an exemplary embodiment. Referring to FIG. 8, a next pixel, i.e., $p(x+1, y)$, is the first pixel, and the pixel block 810 including $p(x+1, y)$ at the center is a unit for brush effect image processing. A digital frame 100 according to an exemplary embodiment applies the image processing with respect to $p(x+1, y)$ in the same or similar manner as explained above with reference to FIG. 7.

As explained above, the digital frame 100 may determine the image data value of the second pixel and the final image data values of the pixels by considering coefficients set for the pixels.

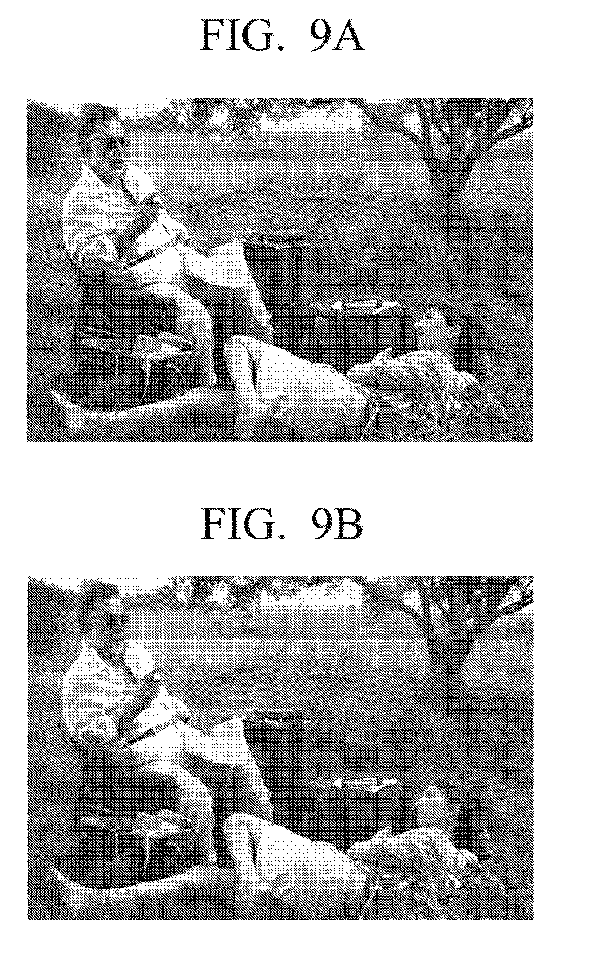

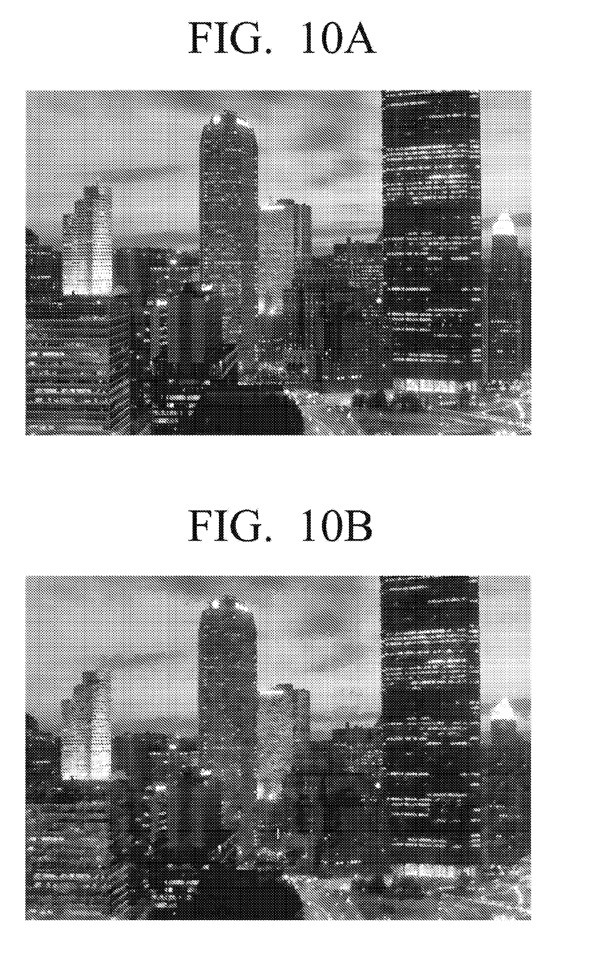

Exemplary images added with a brush effect according to an exemplary embodiment will be explained in detail below with reference to FIGs. 9A, 9B, 10A, and 10B.

FIGs. 9A and 9B are exemplary images before and after a brush effect processing according to an exemplary embodiment, in which FIG. 9A is the original image before the brush effect processing, and FIG. 9B is the image after the brush effect processing.

FIGs. 10A and 10B are other exemplary images before and after a brush effect processing according to an exemplary embodiment, in which FIG. 10A is the original image before the brush effect processing, and FIG. 10B is the image after the brush effect processing.

Referring to FIGs. 9B and 10B, even after the brush effect is applied, the original boundaries remain, while only the colors within the boundaries are blurred. Accordingly, according to the brush effect processing method of the present exemplary embodiment, the original image is changed to look like a watercolor drawing or an oil drawing, while the original boundaries are maintained as they are.

Although the digital frame 100 is provided above as an example of a display according to an exemplary embodiment, it is understood that the digital frame 100 is described only for illustrative purpose. Accordingly, any display apparatus or image processing apparatus that is capable of NPR-processing an inputted image and displaying or outputting the processed image, is applicable according to one or more exemplary embodiments. For example, the image processing apparatus may be implemented as a digital camera, camcorder, a portable multimedia player (PMP), an MP3 player, a mobile phone, a laptop computer, a personal digital assistant (PDA), etc.

While not restricted thereto, an exemplary embodiment can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as computer programs transmitted over a computer-readable transmission medium, such as a carrier wave, and received and implemented in general-use or special-purpose digital computers that execute the programs. Moreover, while not required, one or more units of the digital frame 100 or an image processing apparatus according to an exemplary embodiment can include a processor or microprocessor executing a computer program stored in a computer-readable medium.

The foregoing exemplary embodiments are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of processing an image, the method comprising:

   selecting a first pixel as a pixel for processing, from an inputted image;
   selecting a second pixel from among pixels in proximity to the first pixel; and
   performing a brush effect processing with respect to the first pixel using image data which is selected in accordance with whether or not the first and second pixels belong to a same area.

2. The method of claim 1, wherein the performing comprises:

   determining whether or not the first and second pixels belong to the same area;
   if the first and second pixels are determined to belong to the same area, performing the brush effect processing with respect to the first pixel using brush effect-added image data of a pixel preceding the first pixel; and
   if the first and second pixels are determined to belong to different areas, performing the brush effect processing with respect to the first pixel using original image data of the first pixel.

3. The method of claim 2, wherein the determining comprises:

   setting a threshold for an area corresponding to the first pixel;
   computing a representative value of a pixel block which includes the second pixel and pixels in proximity to the second pixel; and
   determining whether or not the first and second pixels belong to the same area, according to a difference between the threshold and the representative value.

4. The method of claim 3, wherein the determining comprises determining the first and second pixels to be in different areas if the representative value is greater than the threshold, and determining the first and second pixels to be in the same area if the representative value is less than or equal to the threshold.

5. The method of claim 3, wherein the computing comprises computing the representative value (*Area_Det*) of the pixel block by:

$$Area\_Det[\,p(x+j,\,y+i)] = \sum_{m=-1}^{1}\sum_{n=-1}^{1}\left|p(x+j+m,\,y+i+n) - p(x+m,\,y+n)\right|,\quad -1\le j\le 1,\,-1\le i\le 1$$

where *Area_Det*[*p*(*x*+j,*y*+*i*)] is a representative value of pixel (*p*(*x*+j,*y*+*i*)).

6. The method of claim 3, wherein the setting of the threshold comprises setting the threshold in such a manner that the threshold varies in accordance with a type of the area where the first pixel belongs to.

7. The method of one of claims 1 to 6, wherein the selecting of the second pixel comprises selecting, as the second pixel, one of the pixels in proximity to the first pixel using random coordinates.

8. The method of claim 7, wherein the random coordinates are generated by a linear feedback shift register (LFSR).

9. The method of claim 8, further comprising, if the inputted image is a video image, initiating the random coordinates for every frame.

10. The method of one of claims 1 to 9, wherein the selecting of the second pixel comprises selecting one of eight pixels surrounding the first pixel as the second pixel.

11. A display apparatus comprising:

an image processing unit which selects a first pixel as a pixel for processing from an inputted image, selects a second pixel from among pixels in proximity to the first pixel, and performs a brush effect processing with respect to the first pixel using image data which is selected in accordance with whether or not the first and second pixels belong to a same area; and
a display unit which displays the brush effect-added image.

12. The display apparatus of claim 11, wherein the image processing unit determines whether or not the first and second pixels belong to the same area, performs the brush effect processing with respect to the first pixel using brush effect-added image data of a pixel preceding the first pixel if the first and second pixels are determined to be in the same area, and performs the brush effect processing with respect to the first pixel using original image data of the first pixel if the first and second pixels are determined to be in different areas.

13. The display apparatus of claim 12, wherein the image processing unit sets a threshold for an area corresponding to the first pixel, computes a representative value of a pixel block which includes the second pixel and pixels in proximity to the second pixel, and determines whether or not the first and second pixels belong to the same area according to a difference between the threshold and the representative value.

14. The display apparatus of claim 13, wherein the image processing unit determines the first and second pixels to be in different areas if the representative value is greater than the threshold, and determines the first and second pixels to be in different areas if the representative value is less than or equal to the threshold.

15. The display apparatus of claim 13, wherein the image processing unit computes the representative value (*Area_Det*) of the pixel block by:

$$Area\_Det[\,p(x+j,\,y+i)] = \sum_{m=-1}^{1}\sum_{n=-1}^{1}\left|p(x+j+m,\,y+i+n) - p(x+m,\,y+n)\right|,$$
$$\scriptstyle -1\le j\le 1,\,-1\le i\le 1$$

where *Area_Det*[*p(x+j, y+i)*] is a representative value of pixel *p(x+j, y+i)*).

# FIG. 1

100

```
                           110
                      ┌──────────┐
                      │ FUNCTION │
                      │  BLOCK   │
                      └──────────┘
                           ↕           170
                      ┌──────────┐              150              160
   120                │          │         ┌──────────┐    ┌──────────┐
┌──────────────┐      │          │    →    │  IMAGE   │ →  │ DISPLAY  │
│ COMMUNICATING│  ↔   │ CONTROL  │         │PROCESSING│    │   UNIT   │
│    UNIT      │      │   UNIT   │         │   UNIT   │    └──────────┘
└──────────────┘      │          │         └──────────┘
                      │          │    ↕          140
                      │          │    ┌──────────┐
                      │          │  ↔ │ STORAGE  │
                      └──────────┘    │   UNIT   │
                           ↕          └──────────┘
                           130
                      ┌──────────┐
                      │ OPERATING│
                      │   UNIT   │
                      └──────────┘
```

# FIG. 2

```
                    ( START )
                        │
                        ▼
S210 ──┤        INPUT IMAGE        │
                        │
                        ▼
S220 ──┤ SELECT FIRST PIXEL FROM INPUTTED
        │ IMAGE AS THE PIXEL FOR PROCESSING │
                        │
                        ▼
S230 ──┤ GENERATE RANDOM COORDINATES │
                        │
                        ▼
S240 ──┤ SELECT SECOND PIXEL FROM AMONG
        │ PIXELS IN PROXIMITY TO FIRST PIXEL
        │    USING RANDOM COORDINATES      │
                        │
                        ▼
S250 ──┤  SET THRESHOLD OF FIRST PIXEL  │
                        │
                        ▼
S260 ──┤ COMPUTE REPRESENTATIVE VALUE
        │ WITH RESPECT TO PIXEL BLOCK
        │       OF SECOND PIXEL          │
                        │
                        ▼
S270 ──◇ REPRESENTATIVE          N ───────────┐
         VALUE ≦ THRESHOLD? ◇                  │
                        │                      │ S283
                        │ Y                    ▼
                        ▼                   S283
S273 ──┤ DETERMINE FIRST AND SECOND │   ┤ DETERMINE FIRST AND SECOND │
        │   PIXELS TO BE IN SAME AREA │   │ PIXELS TO BE DIFFERENT AREAS │
                        │                      │
                        ▼                      ▼
S276 ──┤ PROCESS BRUSH EFFECT WITH │   ┤ PROCESS BRUSH EFFECT WITH │
        │ RESPECT TO FIRST PIXEL USING │   │ RESPECT TO FIRST PIXEL USING │
        │ BRUSH EFFECT-ADDED IMAGE DATA │   │    ORIGINAL IMAGE DATA       │
        │      OF PREVIOUS PIXEL        │                │
                        │                      │ S286
                        ▼◄─────────────────────┘
S290 ──◇    ARE ALL
      N ── PIXELS OF INPUTTED
           IMAGE PROCESSED ◇
                ?
                        │ Y
                        ▼
                    ( END )
```

# FIG. 3A

F_state_value

310                                    320

# FIG. 3B

ILLUSTRATION OF RANDOM COORDINATES

# FIG. 3C

# FIG. 4

# FIG. 5

# FIG. 6

# FIG. 7

710

| F(0) | F(1) | F(2) |  |  |  |  |  |  |  |  |  |  |  |  |
|------|------|------|--|--|--|--|--|--|--|--|--|--|--|--|
| F(3) | F(4) | F(5) |  |  |  |  |  |  |  |  |  |  |  |  |
| F(6) | F(7) | F(8) |  |  |  |  |  |  |  |  |  |  |  |  |
|  |  |  |  |  |  |  |  |  |  |  |  |  |  |  |
|  |  |  |  |  |  |  |  |  |  |  |  |  |  |  |

# FIG. 8

810

| F(0) | F(1) | F(2) |
| p(x,y)<br>F(3) | p(x+1,y)<br>F(4) | F(5) |
| F(6) | F(7) | F(8) |

# FIG. 9A

# FIG. 9B

# FIG. 10A

# FIG. 10B

Europäisches
Patentamt

European
Patent Office

Office européen
des brevets

**EUROPEAN SEARCH REPORT**

Application Number

EP 11 16 8604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/002951 A1 (ZHAI FAN [US] ET AL) 7 January 2010 (2010-01-07) | 1-4,6, 10-14 | INV. G06T11/00 |
| Y | * abstract * * figure 5 * * paragraphs [0013], [0033], [0049], [0050], [0052] * | 7-9 | |
| | ----- | | |
| X | US 2007/127836 A1 (SUBBOTIN IGOR [US]) 7 June 2007 (2007-06-07) * abstract * * figure 4 * * paragraph [0024] - paragraph [0030] * | 1,11 | |
| | ----- | | |
| X | WINNEMOELLER H ET AL: "Real-Time Video Abstraction", SIGGRAPH CONFERENCE PROCEEDINGS, XX, XX, 3 July 2006 (2006-07-03), pages 1221-1226, XP009095605, * abstract * * figures 1,2 * * section 3.1 * | 1,11 | |
| | ----- | | TECHNICAL FIELDS SEARCHED (IPC) |
| Y | US 6 552 734 B1 (ROZIN DANIEL H [US]) 22 April 2003 (2003-04-22) * figure 5 * * column 5, line 45 - line 57 * | 7-9 | G06T H04N |
| | ----- | | |
| A | Anonymous: "Linear feedback shift register", Wikipedia, 4 June 2010 (2010-06-04), pages 1-8, XP000002657807, Retrieved from the Internet: URL:http://en.wikipedia.org/w/index.php?title=Linear_feedback_shift_register&oldid=365970839 [retrieved on 2011-08-26] * page 1, paragraph 1 - paragraph 4 * | 8 | |
| | ----- | | |

The present search report has been drawn up for all claims

| Place of search | Date of completion of the search | Examiner |
|---|---|---|
| Munich | 2 September 2011 | Scholz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..................................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 11 16 8604

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2011

| Patent document cited in search report | | Publication date | Patent family member(s) | | Publication date |
|---|---|---|---|---|---|
| US 2010002951 | A1 | 07-01-2010 | NONE | | |
| US 2007127836 | A1 | 07-06-2007 | CN | 101326808 A | 17-12-2008 |
| | | | EP | 1964387 A1 | 03-09-2008 |
| | | | JP | 2009518957 A | 07-05-2009 |
| | | | KR | 20080084996 A | 22-09-2008 |
| | | | US | 2008043124 A1 | 21-02-2008 |
| | | | WO | 2007067505 A1 | 14-06-2007 |
| | | | US | 2011149122 A1 | 23-06-2011 |
| US 6552734 | B1 | 22-04-2003 | CA | 2432710 A1 | 18-12-2004 |

EPO FORM P0459

For more details about this annex : see Official Journal of the European Patent Office, No. 12/82